# EUROPÄISCHE PATENTSCHRIFT

(11) **EP 0 480 467 B1**
(45) Veröffentlichungstag und Bekanntmachung des Hinweises auf die Patenterteilung: **27.12.1995**
(21) Anmeldenummer: 91117394.6
(22) Anmeldetag: 11.10.1991
(51) Int. Cl.: B65D 6/16

(54) **Aus gepressten ebenen Formteilen zusammengesetzte Verpackung**
Package assembled from pressed flat components
Emballage assemblé de composants plats pressés

(30) Priorität: 11.10.1990 DE 9014153 U; 18.04.1991 DE 4112725
(43) Veröffentlichungstag der Anmeldung: 15.04.1992
(73) Patentinhaber: Bosch-Siemens Hausgeräte GmbH, 81669 München (DE); LIGNOTOCK GmbH, D-36205 Sontra (DE)
(72) Erfinder: Höpfl, Markus, Dipl.-Ing. (FH), W-8882 Lauingen/Donau (DE); Steck, Wolfgang, Dipl.-Ing., W-7928 Giengen (DE); Scholz, Helmut Günter, W-6638 Dillingen/Saar (DE); Wendler, Alfred, W-6640 Merzig/Fitten (DE)
(74) Vertreter: Pfenning, Meinig & Partner

(56) Entgegenhaltungen:
- DE-A- 2 258 097
- DE-A- 2 517 086
- FR-A- 2 348 112
- US-A- 3 477 604
- US-A- 3 540 613

## Beschreibung

Die Erfindung betrifft eine zerleg- und recyclebare Verpakkung zur Aufnahme von Gegenständen wie Umzugsgut, Geschirrspülern und anderen Haushaltgeräten oder Industrieprodukten aller Art.

Großvolumige Haushaltsgüter sind für den Transport üblicherweise in einer Verpackung eingebracht, bei der das Deckelteil und das Bodenteil aus einem palettenartigen Lattengestell aus Holz bestehen, über die jeweils ein Kartondeckel gestülpt ist, wobei die oberen und unteren Kanten des zu verpackenden Gutes, wie beispielsweise eine Waschmaschine, durch zwischen den Lattengestellen und dem Haushaltsgut angeordneten Polsterteilen aus verschäumtem Polystyrol od.dgl. geschützt werden. Die Längskanten des zu verpackenden Gutes werden ebenfalls durch derartige Schaumkörper geschützt in die als Abstandshalter für die Lattengestelle und zur Versteifung der Schaumteile Holzlatten eingefügt sind. Die gesamte Verpakkungseinheit wird mit Bändern zusammengehalten und von einer Folie umspannt, die üblicherweise als Schrumpffolie aufgebracht ist.

Derartige Verpackungen sind bezüglich der erforderlichen unterschiedlichen Materialien und ihrer Handhabung sehr aufwendig und ihre vielen verschiedenen Teile sind zum größeren Teil nicht wiederverwendbar und können wirtschaftlich einem späteren Verwertungsprozeß nicht zugeführt werden. Dem Benutzer bzw. Käufer des verpackten Gutes wird durch die Vielzahl großer Teile der Rückversand praktisch unmöglich gemacht und damit bleibt ihm die Entsorgung der Verpackung überlassen. Insbesondere die Schaum- und Folienteile sind dann als Problemmüll einzuordnen und führen für den Benutzer bzw. Käufer oder letztlich auch für den Verkäufer bzw. Hersteller des verpackten Gutes zu größeren Anstrengungen bei der Entsorgung.

Zur Vermeidung der vorgenannten Nachteile sind Verpackungen bestehend aus sechs Einzelteilen mit zwei unterschiedlichen Grundformen, die zu einem kubischen Körper zusammenfügbar sind, bekannt geworden bei denen die Teile der Verpackung über formschlüssige Verbindungen zusammengefügt sind (DE-U-89 13 011, DE-A-29 16 871, DE-A-21 09 381, US-A-47 85 957, EP-A-0 154 558).

Verpackungen der vorgenannten Art weisen den Nachteil auf, daß außer den eigentlichen Grundelementen der Verpackung weitere Teile, z.B. die Verbindungsteile einer formschlüssigen Verbindung, benötigt werden, was neben dem zusätzlichen Aufwand für weitere Teile eine schwierige Montage und damit eine insgesamt teuere Verpackung bedeutet. Weiterhin besteht bei der großen Beanspruchung von Verpackungen die Gefahr, daß die Elemente der formschlüssigen Verbindung verschmutzt und/oder beschädigt werden, wodurch eine Wiederverwendung erschwert oder ausgeschlossen wird.

Die US-A-3 540 613 beschreibt einen schnell zusammensetzbaren und schnell demontierbaren Behälter, bei dem jeweils Deckel und Boden, sowie mindestens zwei gegenüberliegende Seitenteile identisch sind. Als Material wird Kunststoff (Duroplaste, Thermoplaste) oder Aluminium vorgeschlagen. Die Verbindung der Wand- und Deckelteile erfolgt durch umlaufenden Nut- und Federfomrschluß. Versteifende oder abstützende Ausdrückungen der Flächen sind nicht erwähnt, dafür wird zur Ausbildung von Nut und Feder hingewiesen.

Die FR-A-2 348 112 offenbart eine mehrfach verwendbare, mit vermindertem Volumen rücksendungsfähige Verpackungskiste und identischen Elementen für gegenüberliegende Bauteile. Alle Elemente sind rechtwinkelig oder abgewinkelt, die Wandelemente V-förmig, Deckel und Boden umlaufend ausgebildet. Als Werkstoff sollen alle in die entsprechende Form zu bringenden Materialien geeinget sein. Die nicht profilierten Seitenwände weisen Durchbrüche zur Kontrolle des Inhaltes bzw. zur Vereinfachung der Beladung auf.

In der DE-A 25 17 086 wird eine ggf. mit Deckel zu versehende Obstkiste, die aus weitgehend ebenen Platten zusammengesetzt ist und aus einstückig verpreßten Holzspan- bzw.Holzfasermaterial besteht, beschrieben. Die Koste kennzeichnet sich durch gleiche gegenüberliegende Seitenwände, Abwinklungen der Seitenwände im Überlappungsbereich und die Verwendung von Zungen, die in Schlitze eingreifen, um Kistendeckel einsetzen zu können. Auch werden Durchbrüche zur Sichtkontrolle und angeformte Nocken für die bodenbefestigung erwähnt, sowie Ausbuchtungen des unteren Randes der Sitenteile nach innen, um die Stapelbarkeit der Kisten zu gewährleisten.

Der Erfindung liegt die Aufgabe zugrunde eine Verpackung bestehend aus sechs Einzelteilen mit zwei unterschiedlichen Grundformen, die zu einem kubischen Körper zusammenfügbar sind, bei der die zwei Grundformen zum einen Deckel- und Bodenteil und zum anderen Seitenteile definieren und bei der sich jeweils gegenüberliegenden Grundformen identisch sind, wobei sie wenigstens in einer Dimension in unterschiedlichen, jedoch gerasterten Längenmaßen vorgebbar sind, zu schaffen, die unter Vermeidung der vorgenannten Nachteile kostengünstiger und mehrfach verwendbar ist.

Diese Aufgabe wird erfindungsgemäß dadurch gelöst, daß die Längskanten der Seitenteile um wenigstens 45° abgewinkelt sind und sich die Abkantungen in Zusammenbaulage, zumindest teilweise, überlappen, wobei die sich bei Formschluß überlappenden Bereiche der Abkantungen der Seitenteile um mindestens Materialstärke ausgestellt und/oder eingezogen sind, daß das Deckel- und Bodenteil sind in Zusammenbaulage ins Innere der Verpackung erstreckende Anlageflächen zur Arretierung des Verpackungsgutes aufweisen und daß jeweils an den Endbereichen der Anlageflächen des Deckel- und Bodenteiles sich in Zusammenbaulage vom Inneren der Verpackung in Richtung auf die Außenflächen des Deckel- und Bodenteiles erstreckende Vertiefungen angeordnet sind.

Durch die geringe Anzahl verschiedener Bauelemente ist eine in der Herstellung und im Rückversand vom Benutzer bzw. Käufer des zu verpackenden Gutes sowie in der Sortierung beim Hersteller bzw. Verpacker des Gutes kostengünstige Verpackung geschaffen, die einer Wiederverwendung zugeführt werden kann. Die recyclebare Mehrfachverwendung wird durch die formstabile Zusammenfügbarkeit der Einzelteile erheblich erleichtert. Auch die Montage und Demontage der erfindungsgemäßen Verpakkung wird durch die auf exakten Formschluß verzichtende Zusammenfügbarkeit der sechs Einzelteile der Verpackung weiter erleichtert. Durch die Abkantungen der Seitenteile und deren erfindungsgemäßen Ausgestaltung nach Anspruch 1 wird eine leichte Montage gewährleistet. Mit den erfindungsgemäßen Anlageflächen ist auf einfache Art und Weise eine sichere Arretierung des Verpackungsgutes geschaffen. Zur Aufnahme ev. an dem zu verpackenden Gut vorhandener Stellfüße sind erfindungsgemäß jeweils an den Endbereichen der Anlageflächen des Deckel- und Bodenteiles sich in Zusammenbaulage vom Inneren der Verpackung in Richtung auf die Außenflächen des Deckel- und Bodenteiles erstreckende Vertiefungen angeordnet.

Nach einer bevorzugten Ausführungsform der Erfindung weist das Seitenteil an beiden Längskanten Abkantungen auf, die unter einem Winkel von 45° zu einer Seitenfläche des Seitenteiles stehen, wobei in dem Bereich beider Abkantungen jeweils wenigstens ein Hinterschnitt angeordnet ist, der um wenigstens eine Materialstärke in Zusammenbaulage ins Innere der Verpackung ragt und dessen, von dem Beginn der Abkantungen aus gesehen, erste rechtwinklige Kante in einem Abstand von dem Beginn der Abkantungen angeordnet ist. Mit dieser Ausgestaltung wird ein einfaches Zusammenstellen und ein gegenseitiges Abstützen der zusammengestellten Seitenteile ermöglicht. Ferner wird damit auch ein rechteckiger Querschnitt der Verpackung erreicht, was insbesondere bei automatischen Förderanlagen vorteilhaft ist.

Nach einer weiteren bevorzugten Ausführungsform der Erfindung weist das Seitenteil an beiden Längskanten jeweils Ausstellungen um wenigstens eine Materialstärke auf, wobei in Zusammenbaulage die Ausstellungen zweier benachbarter, rechtwinklig angeordneter Seitenteile annähernd zur Anlage kommen.

Zur Erhöhung der Knickfestigkeit bei Belastungen von oben, z.B. bei aufgestapelten weiteren Verpackungen und zur Erleichterung des Zusammensetzens der Verpackung sind nach einer bevorzugten Ausführungsform der Erfindung an dem Seitenteil an den beiden Längskanten die Abkantungen von 45° und die Ausstellungen untereinander abwechselnd angeordnet sind.

Nach einer vorteilhaften Ausführungsform der Erfindung weist das Seitenteil an beiden Längskanten jeweils bis zu deren Mitte Abkantungen auf, die in Zusammenbaulage bei formschlüssiger Verbindung eine geschlossene Längskante bilden.

Nach einer weiteren Ausführungsform der Erfindung weist das Seitenteil an beiden Längskanten rechtwinkelige Abkantungen auf, wobei die rechte Abkantung eine rechte Breite und die linke Abkantung eine linke Breite aufweist und wobei im Bereich der rechten Längskante in einem Abstand von der rechten Längskante ein Hinterschnitt angeordnet ist, dessen rechte, äußere Kante einen Abstand von der rechten Längskante von wenigstens der linken Breite und zweimal der Materialstärke aufweist und wobei im Bereich der linken Längskante eine Zurücksetzung der Seitenfläche um wenigstens die Materialstärke angeordnet ist, deren rechte, äußere Kante einen Abstand von der linken Längskante von wenigstens der rechten Breite abzüglich der Materialstärke aufweist. Mit dieser Ausgestaltung wird ein einfaches Zusammenstecken und ein gegenseitiges Abstützen der zusammengesteckten Seitenteile ermöglicht.

Zur Verstärkung und Erhöhung der Knickfestigkeit ist nach einer vorteilhaften Ausführungsform der Erfindung das Seitenteil nach in Zusammenbaulage dem Verpackungsinneren hin bombiert.

Das leichte Zusammensetzen und Auseinandernehmen der erfindungsgemäßen Verpackung wird nach einem bevorzugten Merkmal der Erfindung dadurch verbessert, daß das Deckel- und Bodenteil mit um die gesamten Außenkanten umlaufenden Aufnahmerillen ausgestattet ist, in die die Seitenwände mit ihren in Zusammenbaulage Ober- und Unterkanten eingestellt sind. Durch die Vermeidung formschlüssiger Verbindungen ist die Verschmutzungs oder Beschädigungsgefahr der Verpackungsteile, soweit die Verbindungselemente betroffen sind, weitestgehendst vermieden und damit eine verbesserte Wiederverwendbarkeit der erfindungsgemäßen Verpackung erreicht.

Vorteilhafterweise sind die vorgesehenen erfindungsgemäßen Anlageflächen zur seitlichen Arretierung des zu verpackenden Gutes entlang zweier sich gegenüberliegender Außenkanten des Deckel- und Bodenteiles, jeweils parallel zu der entsprechenden Aufnahmenut angeordnet, wobei zweckmäßigerweise die Anlagefläche mit einer Auflage aus weichen, flexiblen Material ausgestattet sein kann.

Als Führung für Spannbänder ist zweckmäßigerweise an sich gegenüberliegenden Außenkanten des Deckel- und Bodenteiles jeweils wenigstens eine Freistellung angeordnet.

Nach einem bevorzugten Merkmal der Erfindung besteht die Verpackung aus aufgefasertem Holz, das mit Harzen zu Formstücken verpreßt ist. Die Verwendung des erfindungsgemäßen Materials ermöglicht neben der Erstellung einer dauerhaften und damit wiederwendbaren Verpackung weiterhin die Schaffung einer recyclefähigen Verpackung.

In einem bevorzugten Ausführungsbeispiel wird in der Materialwahl von einem Holzfaserwerkstoff ausgegangen, insbesondere von einem solchen, der beidseitig mit nach dem Verpressen festhaftenden Kunstfaservliesen od.dgl. abgedeckt ist.

Die Abdeckung der Oberflächen des Holzfaserwerkstoffes mit Kunstfaservliesen hat mehrere Vorteile: Einmal wird die Formbarkeit des Holzfaserwerkstoffes wesentlich verbessert, so daß auch komplizierte Raumformen zur Anpassung an das Verpackungsgut realisiert werden können. Andererseits kann das Verhalten des Werkstoffes gegen Feuchtigkeit durch eine entsprechende Imprägnierung, beispielsweise mit warmhärtenden Duromeren, verbessert werden. Festigkeit und Bruchverhalten des Holzfaserwerkstoffes kann durch eine derartige Oberflächenbeschichtung, die mitverpreßt wird, verbessert werden.

Das Flächengewicht derartiger Faservliesbeschichtungen kann geringgehalten werden, d.h. 20 bis 100 g/m² genügen bereits, um die beschriebenen Effekte zu erzielen.

Bildet man den Holzfaserwerkstoff dadurch vorteilhaft weiter, daß er in seinem Volumen zusätzlich lagenweise Kunstfaservliese enthält, zwischen denen die Holzfasern angeordnet sind, so lassen sich die beschriebenen vorteilhaften Eigenschaften noch erheblich steigern. Es genügen schon Flächengewichte für die einzelnen Kunstfaservliese von 10 bis 90 g/m² bei einer Menge von insgesamt 10 bis maximal 25 Gew.% Werkstoff, womit die Zahl der Umlaufzyklen bei der Wiederverwendung der Verpackungsteile erheblich durch die damit vorgegebenen Werkstoffeigenschaften gesteigert werden kann.

Durch ungeordnete Einlagerung von einzelnen Kunstfasern in dem Holzfaserwerkstoff - zusätzlich zu den Deckschichtvliesen - ist eine weitere Qualitätsverbesserung ohne erhöhten Fertigungsaufwand erzielbar.

Schadhafte Verpackungsteile lassen sich durch übliche an sich bekannte Mahlverfahren zu jeder gewünschten Körnung granulieren. In einer Menge von 10 bis 60 Gew.% kann ein derartiges Mahlgut dem Holzfaserwerkstoff zugemischt werden, vor allem dann, wenn Kunstfaservliese schichtweise in seinem Volumen angeordnet sind. In diesem Falle ermöglicht der Schichtaufbau die Beibehaltung der Werkstoffeigenschaften, so daß durch die Zumischung des Recyclates in der beschriebenen Menge die Qualität der aus einem derartigen Mischwerkstoff gefertigten Verpackungsteile erhalten bleibt. Zumischung anderen Mahlgutes, wie beispielsweise Recyclat aus Pappen, Holzabfällen oder Textilien, ist natürlich ebenfalls möglich.

Vorteilhafterweise kann der Holzfaserwerkstoff produktspezifisch eingefärbt sein, beispielsweise grau oder schwarz. Auf diese Weise läßt sich unabhängig von einer Zumischung von Recyclaten ein einheitliches Aussehen der Verpackungen in jeweils gewünschter Zuordnung erreichen. Dies ist vor allem dann von Vorteil, wenn einzelne Verpackungsteile ergänzt werden müssen.

Die Erfindung wird nachstehend anhand dem in der Zeichnung dargestellten Ausführungsbeispiel erläutert. Es zeigen:
- Fig. 1: eine perspektivische Darstellung einer zusammengebauten erfindungsgemäßen Verpackung nach einer Ausführungsform,
- Fig. 2: einen Schnitt durch die erfindungsgemäße Verpackung nach der Ausführungsform in Fig. 1 entlang den Schnittlinien II-II,
- Fig. 3: einen Schnitt durch die erfindungsgemäße Verpackung nach der Ausführungsform in Fig. 1 entlang den Schnittlinien III-III,
- Fig. 4: eine perspektivische Darstellung einer zusammengebauten erfindungsgemäßen Verpackung nach einer weiteren Ausführungsform,
- Fig. 5: einen Schnitt durch die erfindungsgemäße Verpackung nach der weiteren Ausführungsform entlang den Schnittlinien V-V in Fig. 4,
- Fig. 6: einen Schnitt durch die erfindungsgemäße Verpackung nach der weiteren Ausführungsform entlang den Schnittlinien VI-VI in Fig. 4,
- Fig. 7: einen Schnitt durch die erfindungsgemäße Verpackung entlang den Schnittlinien VII-VII in Fig. 1, 4, 19 und 22,
- Fig. 8: einen Schnitt durch die erfindungsgemäße Verpackung entlang den Schnittlinien VIII-VIII in Fig. 1, 4, 19 und 22,
- Fig. 9: einen Teilabschnitt einer linken Abkantung eines Seitenteiles der erfindungsgemäßen Verpackung nach der Ausführungsform nach Fig. 4,
- Fig. 10: einen Teilabschnitt einer rechten Abkantung eines Seitenteiles der erfindungsgemäßen Verpackung nach der Ausführungsform nach Fig. 4,
- Fig. 11: zwei gegeneinander gestapelte Seitenteile der erfindungsgemäßen Verpackung nach der Ausführungsform nach Fig. 4,
- Fig. 12: einen Stapel von gegeneinander gestapelten Seitenteilen der erfindungsgemäßen Verpackung nach der Ausführungsform nach Fig. 4,
- Fig. 13: eine Ansicht einer Innenseite eines Deckel- und Bodenteiles der Verpackung nach der Ausführungsform nach Fig. 4,
- Fig. 14: einen Schnitt durch das Deckel- und Bodenteil entlang den Schnittlinien XIV-XIV in Fig. 13,
- Fig. 15: eine Draufsicht auf die zusammengebaute Verpackung nach der Ausführungsform in Fig. 4,

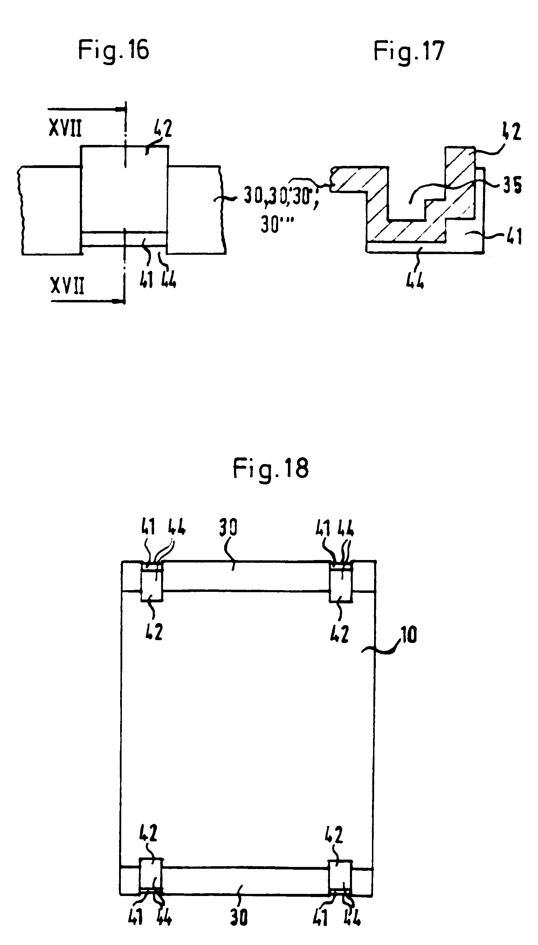

- Fig. 16: einen Auschnitt einer Seitenansicht des Deckel- und Bodenteils der Verpackung,
- Fig. 17: einen Schnitt durch eine Seite eines Deckel- und Bodenteiles der Verpackung entlang den Schnittlinien XVII-XVII in Fig. 16,
- Fig. 18: eine schematische Seitenansicht einer zusammengebauten Verpackung nach der Ausführungsform nach Fig. 4,
- Fig. 19: eine perspektivische Darstellung einer zusammengebauten erfindungsgemäßen Verpackung nach einer bevorzugten Ausführungsform,
- Fig. 20: einen Schnitt durch die erfindungsgemäße Verpackung nach der bevorzugten Ausführungsform entlang den Schnittlinien XX-XX in Fig. 19,
- Fig. 21: einen Schnitt durch die erfindungsgemäße Verpackung nach der bevorzugten Ausführungsform entsprechend Einzelheit Y in Fig. 20 und
- Fig. 22: eine perspektivische Darstellung einer zusammengebauten erfindungsgemäßen Verpackung nach einer weiteren Ausführungsform.

Die im folgenden beschriebenen Figuren zeigen vier Ausführungsformen der erfindungsgemäßen Verpackung. Gleiche funktionelle Bestandteile werden mit gleichen Bezugszeichen beschrieben.

Eine erfindungsgemäße Verpackung 1, 1', 1'', 1''' besteht aus sechs Einzelteilen mit zwei unterschiedlichen Grundformen, die zu einem kubischen Körper zusammenfügbar sind, wobei die zwei Grundformen zum einen Deckel- und Bodenteile 30, 30', 30'', 30''' und zum anderen Seitenteile 10, 10', 10'', 10''' definieren. Die Formgebung der Einzelteile 10, 10', 10'', 10'''; 30, 30', 30'', 30''' der Verpackung 1, 1', 1'', 1''' ist, wie im folgenden beschrieben, so vorgenommen, daß sie sowohl dem mechanischen Schutz als auch die Arretierung des zu verpackenden Gegenstandes innerhalb des kubischen Volumens übernehmen und daß die jeweils sich gegenüberliegenden Grundformen identisch sind, wobei sie wenigsten in einer Dimension in unterschiedlichen, jedoch gerasteten Längenmaßen vorgebbar sind. Bei den beschriebenen Ausführungsbeispielen kann entsprechend die Breite B und/oder die Höhe der Seitenteile 10, 10', 10'', 10''' variieren.

Die nachbeschriebenen Ausführungsformen zeigen Verpackungen 1, 1', 1'', 1''' die einen im wesentlichen quadratischen Querschnitt haben, sodaß alle Seitenteile 10, 10', 10'', 10''' und alle Deckel- und Bodenteile 30, 30', 30'', 30''' einer Verpackung 1, 1', 1'', 1''' identisch sind.

Den nachbeschriebenen Ausführungsformen ist weiterhin gemeinsam, daß das Seitenteil 10, 10', 10'', 10''' an beiden Längskanten 11, 11', 11'', 11'''; 21, 21', 21'', 21''' sowohl seiten- als auch kantenvertauschbare Abkantungen 12, 12', 12'', 12'''; 22, 22', 22'', 22''' aufweist. Die sechs Einzelteile 10, 10', 10'', 10'''; 30, 30', 30'', 30''' der Verpackung 1, 1', 1'', 1''' sind formstabil, wie zu den einzelnen Ausführungsbeispielen beschrieben, zusammenfügbar.

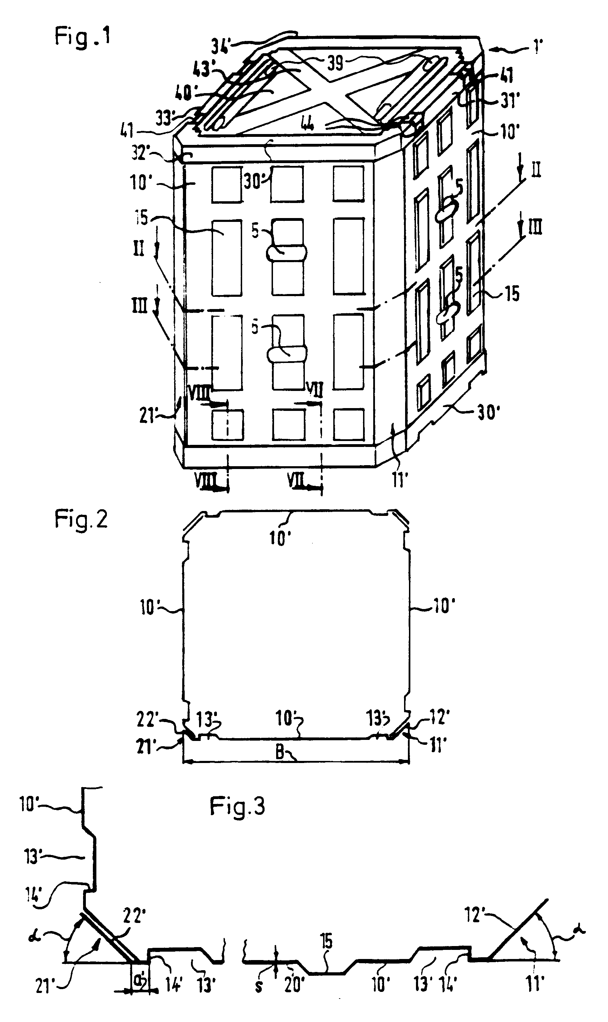

Bei einer Ausführungsform der erfindungsgemäßen Verpackung 1' (Figuren 1 bis 3) weist das Seitenteil 10' an beiden Längskanten 11', 21' Abkantungen 12', 22' auf, die unter einem Winkel von 45° zu einer Seitenfläche 20' des Seitenteiles 10' stehen.

In dem Bereich der Abkantungen 12', 22' ist jeweils ein Hinterschnitt 13' angeordnet, der um eine Materialstärke s in Zusammenbaulage ins Innere der Verpackung 1' ragt, dessen, von dem Beginn der Abkantungen 12', 22' aus gesehen, erste rechtwinklige Kante 14' in einem Abstand a' von dem Beginn der Abkantungen 12', 22' angeordnet ist.

Die zusammengebaute Verpackung 1' weist je zwei gegenüberliegende Seitenteile 10' mit an beiden Längskanten 11', 21' außenliegenden Abkantungen 12', 22' und zwischen diesen die weiteren beiden Seitenteile 10' mit innenliegenden Abkantungen 12', 22' auf (Fig. 2).

Durch Aufsetzen des Deckelteiles 30' auf die in das Bodenteil 30' eingestellten Seitenteile 10' wird eine formstabile Verpackung 1' zusammengefügt.

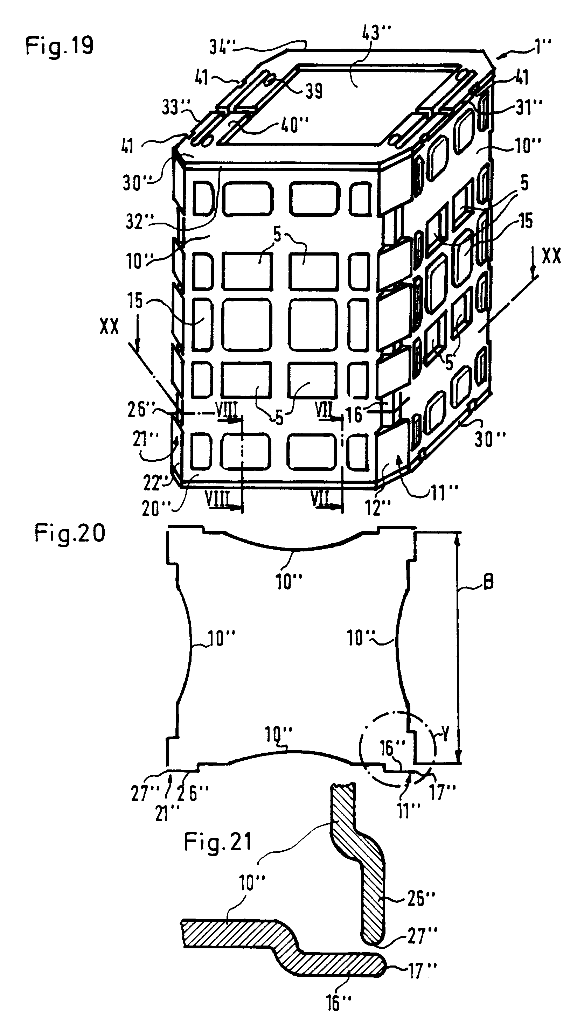

Bei der bevorzugten Ausführungsform der erfindungsgemäßen Verpackung 1'' (Figuren 19 bis 21) weist das Seitenteil 10'' an beiden Längskanten 11'', 21'' ebenfalls Abkantungen 12'', 22'' auf, die unter einem Winkel von 45° zu einer Seitenfläche 20'' des Seitenteiles 10'' stehen. Die Abkantungen 12'', 22'' sind über die Längskanten 11'', 21'' verteilt. Die Form und Gestaltung der Abkantungen 12'', 22'' entspricht der der vorbeschriebenen Ausführungsform nach Fig. 1 bis 3.

Bei der bevorzugten Ausführungsform der erfindungsgemäßen Verpackung 1'' weist das Seitenteil 10'' an beiden Längskanten 11'', 21'' weiterhin jeweils Ausstellungen 16'', 26'' um wenigstens eine Materialstärke s auf. In Zusammenbaulage kommen die Außenkanten 17'', 27'' der Ausstellungen 16'', 26'' von zwei benachbarten, rechtwinklig zueinander angeordneten Seitenteile 10'' annähernd zur Anlage (Fig. 21). Die Ausstellungen 16'', 26'' sind ebenfalls über die Längskanten 11'', 21'' verteilt.

An den beiden Längskanten 11'', 21'' des Seitenteiles 10'' der bevorzugten Ausführungsform sind die Abkantungen 12'', 22' von 45° und die Ausstellungen 16'', 26'' untereinander abwechselnd angeordnet.

Die zusammengebaute Verpackung 1'' weist je zwei gegenüberliegende Seitenteile 10'' mit an beiden Längskanten 11'', 21'' außenliegenden Abkantungen 12'', 22'' und zwischen diesen die weiteren beiden Seitenteile 10'' mit innenliegenden Abkantungen 12'', 22'' auf (Fig. 2), wobei die Ausstellungen 16'', 26'' entsprechend angeordnet sind (Fig. 20).

Durch Aufsetzen des Deckelteiles 30'' auf die in das Bodenteil 30'' eingestellten Seitenteile 10'' wird eine formstabile Verpackung 1'' zusammengefügt.

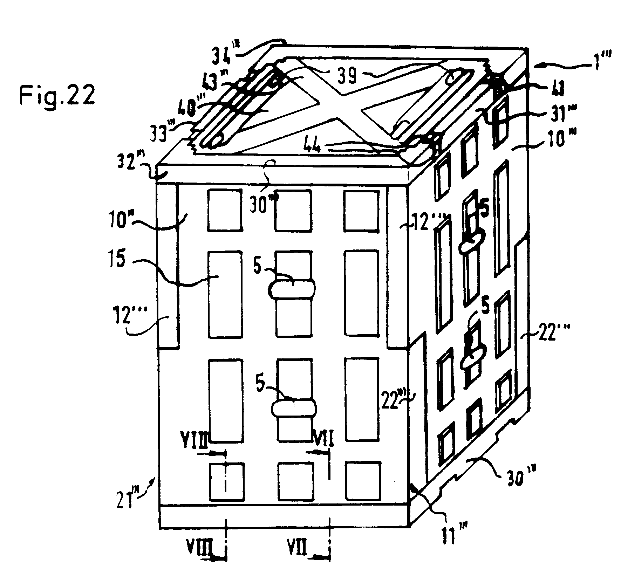

Nach einer weiteren Ausführungsform der erfindungsgemäßen Verpackung (Figur 22) weist das Seitenteil 10''' an beiden Längskanten 11''', 21''', jeweils bis zu deren Hälfte, Abkantungen 12''', 22''' auf, die in Zusammenbaulage bei formschlüssiger Verbindung eine geschlossene Längskante 11''', 21''' bilden. Die Abkantungen 12''', 22''' sind rechtwinklig und liegen auf der Außenfläche 20''' des benachbarten Seitenteiles 10''' auf.

Durch Aufsetzen des Deckelteiles 30''' auf die in das Bodenteil 30''' eingestellten Seitenteile 10''' wird eine formstabile Verpackung 1''' zusammengefügt.

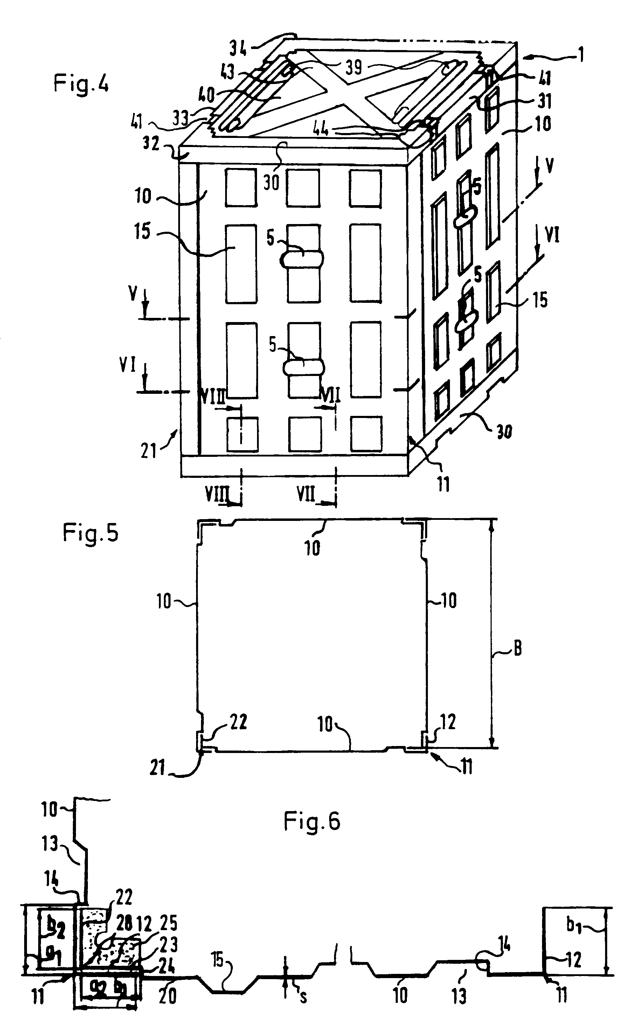

Nach einer weiteren Ausführungsform der erfindungsgemäßen Verpackung (Figuren 4 bis 6 und 9 bis 12) weist das Seitenteil 10 an beiden Längskanten 11, 21 rechtwinkelige Abkantungen 12, 22 auf. Die rechte Abkantung 12 weist eine rechte Breite b₁ und die linke Abkantung 22 eine linke Breite b₂ auf.

Im Bereich der rechten Längskante 11 ist in einem Abstand von der rechten Längskante 11 ein Hinterschnitt 13 angeordnet, dessen rechte, äußere Kante 14 einen Abstand a₁ von der rechten Längskante 11, entsprechend der linken Breite b₂ und zweimal der Materialstärke s der Teile 10, 30 der Verpackung 1, aufweist.

Im Bereich der linken Längskante 21 ist eine Zurücksetzung 23 der Seitenfläche 20 um die Materialstärke s angeordnet, deren rechte, äußere Kante 24 einen Abstand a₂ von der linken Längskante 21, entsprechend der rechten Breite b₁ abzüglich der Materialstärke s, aufweist.

Bei dieser Ausführungsform muß zwar das letzte der in das Bodenteil 30 einzustellenden Seitenteile 10 beim Zusammenbau der Verpackung 1 von oben eingeschoben werden, aber dadurch wird sie schon vor dem Aufsetzen des Deckelteiles 10 auf die eingestellten Seitenteile 10 formstabil.

Das Seitenteil 10, 10', 10'', 10''' der beschriebenen Ausführungsformen der erfindungsgemäßen Verpackung 1, 1', 1'', 1''' ist in Zusammenbaulage nach dem Inneren der Verpackung 1, 1', 1'', 1''' hin bombiert (Fig. 20).

Im Bereich der linken Längskante 21, 21', 21'', 21''' des Seitenteiles 10, 10', 10'', 10''' ist entlang deren Innenkante 28 ein Polsterteil 25 aus einem weichen, flexiblen Material angeordnet. Das Polsterteil der Verpackung 1', 1'' und 1''' nach den Ausführungsformen nach Fig. 1 bis 3; 19 bis 21 und 22 ist nicht dargestellt. Das dargestellte Polsterteil 25 der Verpackung 1 nach der Ausführungsform nach Fig. 4 bis 6 ist an der Innenkante 28 angeklebt.

Das Seitenteil 10, 10', 10'', 10''' ist mit Prägungen 15 ausgestattet. Bei den beschriebenen Ausführungsbeispielen der Erfindung ragen diese Prägungen 15 in Zusammenbaulage nach außen. Das Seitenteil 10, 10', 10'', 10''' weist Griffelemente 5 auf, die als Griffmulden ausgebildet sind.

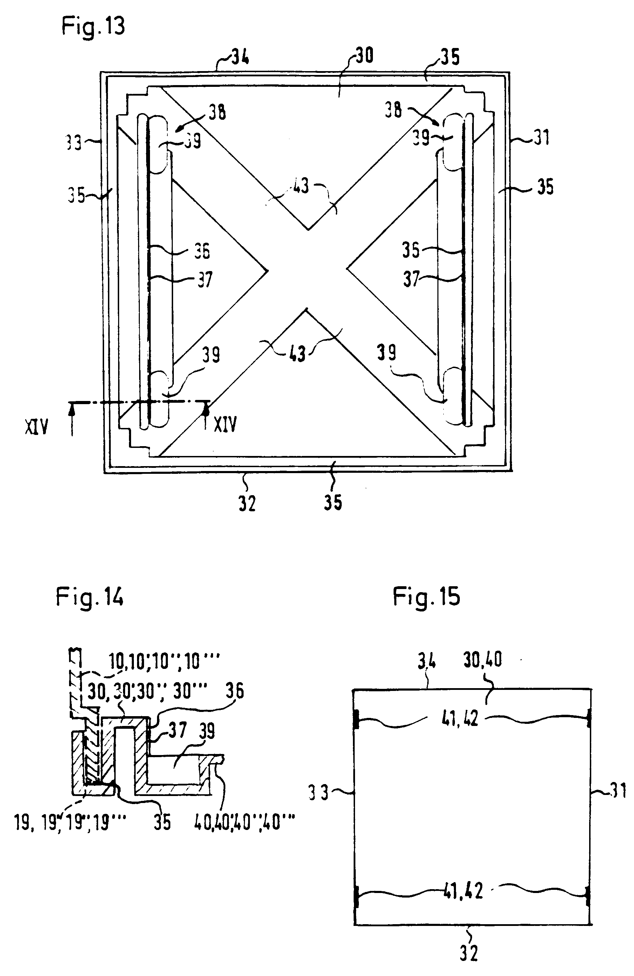

Das Deckel- und Bodenteil 30, 30', 30'', 30''' ist mit um die gesamten Außenkanten 31, 31', 31'', 31'''; 32, 32', 32'', 32'''; 33, 33', 33'', 33'''; 34, 34', 34'', 34''' umlaufenden Aufnahmerillen 35 ausgestattet. Entlang zweier sich gegenüberliegender Außenkanten 31, 31', 31'', 31'''; 33, 33', 33'', 33''' des Deckel- und Bodenteiles 30, 30', 30'', 30''' jeweils parallel zu der entsprechenden Aufnahmerille 35 ist eine sich in Zusammenbaulage ins Innere der Verpackung 1, 1', 1'', 1''' erstreckende Anlagefläche 36 angeordnet, die mit einer Auflage 37 aus weichen, flexiblen Material ausgestattet ist. Die Auflage 37 ist auf die Anlagefläche 36 aufgeklebt. Jeweils an den Endbereichen 38 der Anlageflächen 36 des Deckel- und Bodenteiles 30, 30', 30'', 30''' sind sich in Zusammenbaulage vom Inneren der Verpackung 1, 1', 1'', 1''' in Richtung auf die Außenflächen 40, 40', 40'', 40''' des Deckel- und Bodenteiles 30, 30', 30'', 30''' erstreckende Vertiefungen 39 angeordnet (Fig. 14).

Das Deckel- und Bodenteil 30, 30', 30'', 30''' weist Prägungen 43, 43', 43'', 43''' auf, die in Zusammenbaulage in das Innere der Verpackung 1, 1', 1'', 1''' ragen.

Die Seitenwände 10, 10', 10'', 10''' sind in Zusammenbaulage mit ihren Ober- und Unterkanten 19, 19', 19'', 19''' in die Aufnahmerillen 35 der Deckel- und Bodenteile 30, 30', 30'', 30''' eingestellt (Fig. 14).

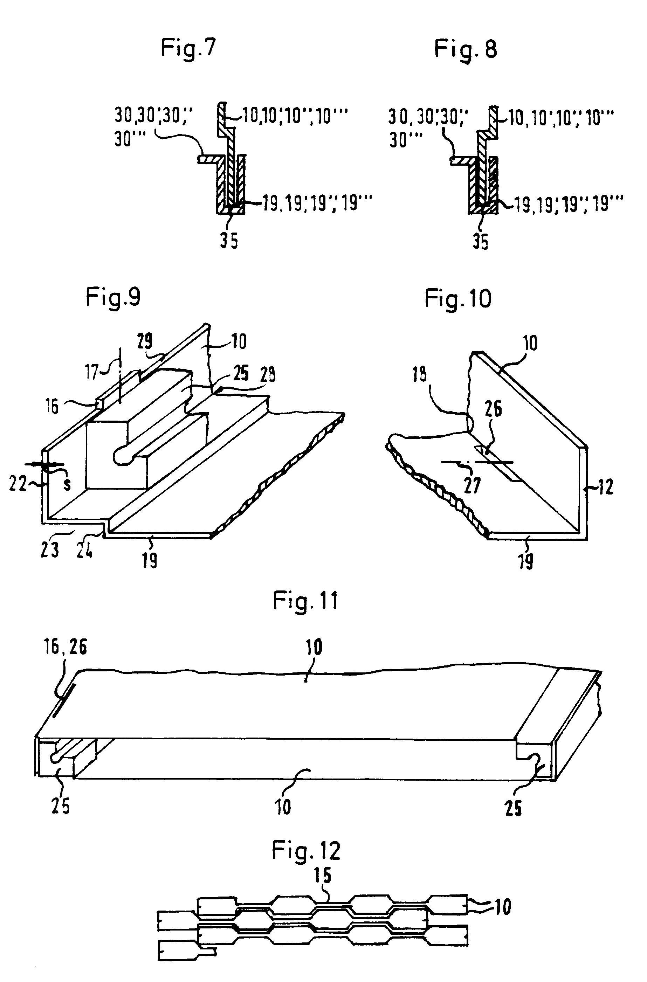

Bei der Ausführungsform der Verpackung 1 nach Fig. 4 bis 6 sind an der Außenkante 29 der linken Abkantung 22 des Seitenteiles 10 zwei um die Materialstärke s vorstehende Zapfen 16 angeordnet, die mit an der Innenkante 18 der rechten Abkantung 12 angeordneten zwei Aufnahmeöffnungen 26 bei entsprechend Fig. 11 gegeneinanderliegenden Seitenteilen 10 zusammenwirken. Dazu haben die Mitten 17 der Zapfen 16 und die Mitten 27 der Aufnahmeöffnungen 26 von der die entsprechenden Längskanten 11, 21 des Seitenteiles 10 verbindenden Ober- oder Unterkante 19 den gleichen Abstand und die Aufnahmeöffnungen 26 sind so groß, daß sie die Zapfen 16 aufnehmen können.

Die Ausführung der Verpackung 1 nach Fig. 4 bis 6 werden zum Stapeln entspr. Fig. 11 zu Paaren gegeneinandergelegt und dann versetzt, wie in Fig. 12 gezeigt, gestapelt und durch die Prägungen 15 seitlich gehalten.

Bei der Verpackung 1', 1'' und 1''' nach den Ausführungsformen nach Fig. 1 bis 3, 19 und 21 und 22 sind die Seitenteile 10', 10'' und 10''' ohne gegeneinander verdreht werden zu müssen aufeinander stapelbar.

An zwei sich gegenüberliegenden Außenkanten 31, 31', 31'', 31''', 33, 33', 33'', 33''' des Deckel- und Bodenteiles 30, 30', 30'', 30''' sind jeweils zwei Freistellungen 41 angeordnet, die mit gegenüber jeder Freistellung 41 angeordneten, um die Materialstärke s vorstehenden Zapfen 42 bei gestapelten Deckel - und Bodenteilen 30, 30', 30'', 30''' zusammenwirken. Dazu sind die Freistellung 41 so groß, daß sie die Zapfen 42 aufnehmen können.

Bei zusammengebauter Verpackung 1, 1', 1'', 1''' dienen die Freistellungen 41 der Deckel- und Bodenteile 30, 30', 30'', 30''' zur Führung von Spannbändern und können deshalb als Spannbandnuten 44 über den gesamten Rand der Deckel- und Bodenteile 30, 30', 30'', 30''' verlängert sein.

Die erfindungsgemäße Verpackung 1, 1', 1'', 1''' nach den drei beschriebenen Ausführungsbeispielen besteht aus aufgefasertem Holz, das mit Harzen zu Formstücken verpreßt ist.

## Patentansprüche

1. Verpackung bestehend aus 6 Einzelteilen mit zwei unterschiedlichen Grundformen, die zu einem kubischen Körper zusammenfügbar sind, bei der die zwei Grundformen zum einen Deckel- und Bodenteil (30, 30', 30'', 30''') und zum anderen Seitenteile (10, 10', 10'', 10''') definieren und bei der sich jeweils gegenüberliegende Grundformen identisch sind, wobei sie wenigstens in einer Dimension in unterschiedlichen, jedoch gerasterten Längenmaßen vorgebbar sind, **dadurch gekennzeichnet**, daß die Längskanten (11, 11', 11'', 11''', 21, 21', 21'', 21''') der Seitenteile (10, 10', 10'', 10''') um wenigstens 45° abgewinkelt sind und sich die Abkantungen (12, 12', 12'', 12''', 22, 22', 22'', 22''') in Zusammenbaulage, zumindest teilweise, überlappen, wobei die sich bei Formschluß überlappenden Bereiche der Abkantungen (12, 12', 12'', 12''', 22, 22', 22'', 22''') der Seitenteile (10, 10', 10'', 10''') um mindestens Materialstärke (s) ausgestellt und/oder eingezogen sind, daß das Deckel- und Bodenteil (30, 30', 30'', 30''') sich in Zusammenbaulage ins Innere der Verpackung (1, 1', 1'', 1''') erstreckende Anlageflächen (36) zur Arretierung des Verpackungsgutes aufweisen und daß jeweils an den Endbereichen (38) der Anlageflächen (36) des Deckel- und Bodenteiles (30, 30', 30'', 30''') sich in Zusammenbaulage vom Inneren der Verpackung (1, 1', 1'', 1''') in Richtung auf die Außenflächen (40, 40', 40'', 40''') des Deckel- und Bodenteiles (30, 30', 30'', 30''') erstreckende Vertiefungen (39) angeordnet sind.

2. Verpackung nach Anspruch 1, dadurch gekennzeichnet, daß das Seitenteil (10') an beiden Längskanten (11', 21') Abkantungen aufweist, die unter einem Winkel (α) von 45° zu einer Seitenfläche (20') des Seitenteiles (10') stehen, wobei in dem Bereich beider Abkantungen (12') jeweils wenigstens ein Hinterschnitt (13') angeordnet ist, der um wenigstens eine Materialstärke (s) in Zusammenbaulage ins Innere der Verpackung (1') ragt und dessen, von dem Beginn der Abkantungen (12', 22') aus gesehen, erste rechtwinklige Kante (14') in einem Abstand (a') von dem Beginn der Abkantungen (12', 22') angeordnet ist.

3. Verpackung nach Anspruch 1, dadurch gekennzeichnet, daß das Seitenteil (10'') an beiden Längskanten (11'', 21''), jeweils Ausstellungen (16'', 26'') um wenigstens eine Materialstärke (s) aufweist, wobei in Zusammenbaulage die Außenkanten (17'', 27'') der Ausstellungen (16'', 26'') zweier benachbarter, rechtwinklig angeordneter Seitenteile (10'') annähernd zur Anlage kommen.

4. Verpackung nach Anspruch 2 und 3, dadurch gekennzeichnet, daß an dem Seitenteil (10'') an den beiden Längskanten (11'', 21'') die Abkantungen (12', 22') von 45° und die Ausstellungen (16'', 26'') untereinander abwechselnd angeordnet sind.

5. Verpackung nach Anspruch 1, dadurch gekennzeichnet, daß das Seitenteil (10''') an beiden Längskanten (11''', 21'''), jeweils bis zu deren Hälfte Abkantungen (12''', 22''') aufweist, die in Zusammenbaulage bei formschlüssiger Verbindung eine geschlossene Längskante (11''', 21''') bilden.

6. Verpackung nach Anspruch 1, dadurch gekennzeichnet, daß das Seitenteil (10) an beiden Längskanten (11, 21) rechtwinkelige Abkantungen (12, 22) aufweist, wobei die rechte Abkantung (12) eine rechte Breite (b₁) und die linke Abkantung (22) eine linke Breite (b₂) aufweist und wobei im Bereich der rechten Längskante (11) in einem Abstand (a₁) von der rechten Längskante (11) ein Hinterschnitt (13) angeordnet ist, dessen rechte, äußere Kante (14) einen Abstand von der rechten Längskante (11) von wenigstens der linken Breite (b₂) und zweimal der Materialstärke (s) aufweist und wobei im Bereich der linken Längskante (21) eine Zurücksetzung (23) der Seitenfläche (20) um wenigstens die Materialstärke (s) angeordnet ist, deren rechte, äußere Kante (24) einen Abstand (a₂) von der linken Längskante (21) von wenigstens der rechten Breite (b₁) abzüglich der Materialstärke (s) aufweist.

7. Verpackung nach einem der Ansprüche 1 bis 6, dadurch gekennzeichnet, daß das Seitenteil (10, 10', 10'', 10''') in Zusammenbaulage nach dem Inneren der Verpakkung (1, 1', 1'', 1''') hin bombiert ist.

8. Verpackung nach einem der Ansprüche 1 bis 7, dadurch gekennzeichnet, daß das Deckel- und Bodenteil (30, 30', 30'', 30''') mit um die gesamten Außenkanten (31, 31', 31'', 31''', 32, 32', 32'', 32''', 33, 33', 33'', 33''', 34, 34', 34'', 34''') umlaufenden Aufnahmerillen (35) ausgestattet ist, in die die Seitenteile (10, 10', 10'', 10''') mit ihren in Zusammenbaulage Ober- und Unterkanten (19, 19', 19'', 19''') eingestellt sind.

9. Verpackung nach einem der Ansprüche 1 bis 8, dadurch gekennzeichnet, daß die Anlageflächen (36) entlang zweier sich gegenüberliegender Außenkanten (31, 31', 31'', 31''', 33, 33', 33'', 33''') des Deckel- und Bodenteiles (30, 30', 30'', 30'''), jeweils parallel zu der entsprechenden Aufnahmenut (35) angeordnet sind, wobei die Anlageflache (36) mit einer Auflage (37) aus weichem, flexiblen Material ausgestattet sein kann.

10. Verpackung nach einem der Ansprüche 1 bis 9, dadurch gekennzeichnet, daß an sich gegenüberliegender Außenkanten (31, 31', 31'', 31''', 33, 33', 33'', 33''') des Deckel- und Bodenteiles (30, 30', 30'', 30'''), jeweils wenigstens eine Freistellung (41) angeordnet ist.

11. Verpackung nach einem der Ansprüche 1 bis 10, dadurch gekennzeichnet, daß die Verpackung (1, 1', 1'', 1''') aus aufgefasertem Holz, das mit Harzen zu Formstücken verpreßt ist, besteht.

12. Verpackung nach einem der Ansprüche 1 bis 11, dadurch gekennzeichnet, daß der Holzfaserwerkstoff beiderseitig mit nach dem Verpressen festhaftenden Kunstfasservliesen abgedeckt ist, deren Flächengewicht 20 bis 100 q/m² beträgt.

13. Verpackung nach einem der Ansprüche 1 bis 12, dadurch gekennzeichnet, daß der Holzfaserwerkstoff zusätzlich zu seinem Volumen mehrere schichtweise angeordnete Kunstfaservliese enthält, deren Flächengewicht 10 bis 15 q/m² beträgt, wobei der Gesamtanteil der Kunstfaservliese 10 bis 25 Gew.% beträgt.

14. Verpackung nach einem der Ansprüche 1 bis 13, dadurch gekennzeichnet, daß der Holzfaserwerkstoff zusätzlich zu den Oberflächenvliesen einen Anteil von 5 bis 15 Gew.% Kunstfasern enthält.

15. Verpackung nach einem der Ansprüche 1 bis 14, dadurch gekennzeichnet, daß der Holzfaserwerkstoff Mahlgut von unbrauchbar gewordenen Verpackungsteilen der beschriebenen Art in einer Menge von 10 bis 60 Gew.% enthält.

16. Verpackung nach einem der Ansprüche 1 bis 15, dadurch gekennzeichnet, daß der Holzfaserwerkstoff Mahlgut anderer Recyclingwerkstoffe, wie beispielsweise Pappe, Holzabfälle und Textilien, enthält.

17. Verpackung nach einem der Ansprüche 1 bis 16, dadurch gekennzeichnet, daß der Holzfaserwerkstoff produktbezogen eingefärbt ist.

## Claims

1. Packaging, comprising 6 individual parts with two different basic shapes which are assembled into a cubic body, and with the two basic shapes defining, on the one hand, a cover- and a base portion (30, 30', 30'', 30''') and, on the other band, side portions (10, 10', 10'', 10'''), with opposite basic shapes being identical, and that they are specifiable in at least one dimension in different but scaled longitudinal dimensions, **characterized in that** the longitudinal edges (11, 11', 11'', 11''', 21, 21', 21'', 21''') of the side elements (10, 10', 10'', 10''') are angled by at least 45° and that the edgings (12, 12', 12'', 12''', 22, 22', 22'', 22''') in their assembled state at least partially overlap, and that positively connected overlapping areas of the edgings (12, 12', 12'', 12''', 22, 22', 22'', 22''') of the side elements (10, 10', 10'', 10''') are set out and/or drawn in by at least the material thickness (s), that the cover- and base portion (30, 30', 30'', 30''') in the assembled state have abutment surfaces (36) extending into the inside of the packaging (1, 1', 1'', 1''') for attesting the packaging material, and that in the respective end areas (38) of the abutment surfaces (36) of the cover- and base portion (30, 30', 30'', 30''') are arranged recesses (39) which, in an assembled state, extend from the inside of the packaging (1, 1', 1'', 1''') towards the outside surfaces (40, 40', 40'', 40''') of the cover- and base portion (30, 30', 30'', 30''')

2. Packing according to Claim 1, **characterized in that** the side portion (10') has on both longitudinal edges (11', 21') edgings at an angle (α) of 45° relative to a side surface (20') of the side portion (10'), and that in the area of both edgings (12') is arranged at least one each undercut (13') which extends by at least one material thickness (s) in an assembled state into the inside of the packaging (1') and the first rectangular edge (14') of which is arranged, as seen from the start of the edgings (12', 22'), at a distance (a') from the beginning of the edgings (12', 22').

3. Packaging according to Claim 1, **characterized in that** the side portion (10'') has on both longitudinal edges (11'', 21'') two respective protrusions (16'', 26'') by at least one material thickness (s), and that in the assembled state the outside edges (17'', 27'') of the protrusions (16'', 26'') of two adjacent and rectangularly arranged side portions (10'') are virtually abutting.

4. Packaging according to Claim 2 and 3, **characterized in that** on the side portion (10'') on both longitudinal edges (11'', 21'') the edgings (12', 22') of 45° and the protrusions (16'', 26'') are arranged to alternate.

5. Packaging according to Claim 1, **characterized in that** the side portion (10''') has on both longitudinal edges (11''', 21''') up to their half edgings (12''', 22''') which in their assembled state and with positive connection form a sealed longitudinal edge (11''', 21''').

6. Packaging according to claim 1, **characterized in that** the side portion (10) has on both longitudinal edges (11, 21) rectangular edgings (12, 22), and that the right edging (12) has a right width (b₁), that the left edging (22) has a left width (b₂), and that in the area of the right longitudinal edge (11) at a distance (a₁) from the right longitudinal edge (11) is arranged an undercut (13) the right outer edge (14) of which is at a distance from the right longitudinal edge (11) of at least the left width (b₂) and twice the material thickness (s), and that in the area of the left longitudinal edge (21) is arranged a recess (23) of the side surface (20) by at least the material thickness (s) the right outer edge (24) of rich is at a distance (a₂) from the left longitudinal edge (21) of at least the right width (b₁) less the material thickness (s).

7. Packaging according to one of Claims 1 to 6, characterized in that the side portion (10, 10', 10'', 10''') in the assembled state is cambered towards the inside of the packaging (1, 1', 1'', 1''').

8. Packaging according to one of Claims 1 to 7, **characterized in that** the cover- and base portion (30, 30', 30'', 30''') is equipped with receiving grooves (35), which are spaced peripherally around all outside edges (31, 31' 31'', 31''', 32, 32', 32'', 32''', 33, 33', 33'', 33''', 34, 34', 34'', 34''') into which are seated the side portions (10, 10', 10'', 10''') with their top and bottom edges (19, 19', 19'', 19''') in the assembled state.

9. Packages according to one of claims 1 to 8, **characterized in that** the abutment surfaces (36) are arranged along two opposite outside edges (31, 31', 31'', 31''', 33, 33', 33'', 33''') of the cover- and base portion (30, 30', 30'', 30''') and parallel to a respective receiving groove (35), and that the abutment surface (36) with its seating (37) can be fitted with a soft and flexible material.

10. Packaging according to one of claims 1 to 9, **characterized in that** on opposite outside edges (31, 31', 31'', 31''', 33, 33', 33'', 33''') of the cover- and base portion (30, 30', 30'', 30''') is arranged at least one respective release (41).

11. Packaging according to one of Claims 1 to 10, **characterized in that** the packaging (1, 1', 1'', 1''') is made of wood fibre which is compressed with resins into shape.

12. Packaging according to one of Claims 1 to 11, **characterized in that** the wood-fibre material is covered on both sides with synthetic fibre fleece which adheres after compression and the surface weight of which is between 20 and 100 q/m².

13. Packaging according to one of claims 1 to 12, **characterized in that** the wood-fibre material is, in addition to its volume, given a plurality of layered synthetic fibre fleece the surface weight of which is between 10 and 15 q/m², and that the total portion of the synthetic fibre fleece lies between 10 and 25 %-by-weight.

14. Packaging according to one of claims 1 to 13, **characterized in that** the wood-fibre material contains, in addition to the surface fleece, a portion of between 5 and 15 %-by-weight synthetic fibres.

15. Packaging according to one of claims 1 to 14, **characterized in that** the wood-fibre material contains ground material of unusable packaging portions of the described type at a quantity between 10 and 60 %-by-weight.

16. Packaging according to one of claims 1 to 15, **characterized in that** the wood-fibre material contains ground material of other recycling materials, such as cardboard, wood waste and textiles.

17. Packaging according to one of claims 1 to 16, **characterized in that** the wood-fibre material is dyed with product reference.

## Revendications

1. Emballage composé de 6 parties distinctes, comprenant deux formes de base différentes qui peuvent être assemblées pour former un corps cubique, dans lequel les deux formes de base définissent, d'une part, une partie couvercle et fond (30, 30', 30'', 30''') et, d'autre part, des parties latérales (10, 10', 10'', 10''') et dans lequel les formes de base mutuellement opposées sont identiques, cependant qu'elles peuvent être prédéterminées, au moins dans une dimension, dans des longueurs différentes mais coordonnées, caractérisé en ce que les bords longitudinaux (11, 11', 11'', 11''', 21, 21', 21'', 21''') des parties latérales (10, 10', 10'', 10''') sont rabattus d'au moins 45° et en ce que les rabats (12, 12', 12'', 12''', 22, 22', 22'', 22''') se recouvrent au moins partiellement à l'état assemble, les régions des rabats (12, 12', 12'', 12''', 22, 22', 22'', 22''') des parties latérales (10, 10', 10'', 10''') qui se recouvrent avec liaison par sûreté de forme étant déportés vers l'extérieur et/ou en retrait d'au moins l'épaisseur (s) de la matière, en ce que la partie couvercle et fond (30, 30', 30'', 30''') présentent des surfaces d'appui (36) qui s'engagent dans le volume intérieur de l'emballage (1, 1', 1'', 1''') à l'état assemblé, pour bloquer le produit emballé, et en ce que, le long des régions terminales (38) des surfaces d'appui (36) de la partie couvercle et fond (30, 30', 30'', 30''') sont prévues respectivement des bosses (39) qui se projettent de l'intérieur de l'emballage (1, 1', 1'', 1''') en direction des surfaces extérieures (40, 40', 40'', 40''') de la partie couvercle et fond (30, 30', 30'', 30''') à partir de l'intérieur de l'emballage (1, 1', 1'', 1''') à l'état assemblé.

2. Emballage selon la revendication 1, caractérisé en ce que la partie latérale (10') présente, le long des deux bords longitudinaux (11', 21'), des rabats qui sont inclinés d'un angle (α) de 45° vers une surface latérale (20') de la partie latérale (10'), tandis que, dans la région de chacun des deux rabats (12') est prévu au moins un redan (13') qui fait saillie à l'intérieur de l'emballage (1') sur au moins une épaisseur (s) de la matière à l'état assemblé, et dont le premier bord à angle droit (14'), vu à partir du début des rabats (12', 22'), est disposé à une distance (a') du début des rabats (12', 22').

3. Emballage selon la revendication 1, caractérisé en ce que la partie latérale (10'') présente, le long des deux bords longitudinaux (11'', 21''), des parties déportées vers l'extérieur (16'', 26'') d'au moins une épaisseur (s) de la matière, tandis qu'à l'état assemblé, les bords extérieurs (17'', 27'') des parties déportées vers l'extérieur (16'', 26'') de deux parties latérales (10'') voisines, disposées perpendiculairement, viennent à peu près en contact.

4. Emballage selon les revendications 2 et 3, caractérisé en ce qu'à la partie latérale (10''), le long des deux bords longitudinaux (11'', 21''), les rabats (12', 22') à 45° et les parties déportées vers l'extériseur (16', 26') sont disposés en alternance entre eux.

5. Emballage selon la revendication 1, caractérisé en ce que la partie latérale (10''') présente, le long des deux bords longitudinaux (11''', 21'''), pour chacun jusqu'à leur moitié, des rabats (12''', 22''') qui forment un bord longitudinal ferme (11''', 21''') à l'état assemblé, avec assemblage par sûreté de forme.

6. Emballage selon la revendication 1, caractérise en ce que la partie latérale (10) présents, le long des deux bords longitudinaux (11, 21), des rabats à angle droit (12, 22), le rabat droit (12) présentant une largeur droite (b₁) et le rabat gauche (22) une largeur gauche (b₂) cependant que, dans la région du bord longitudinal droit (11), est dispose, à une distance (a₁) du bord longitudinal droit (11), un redan (13) dont le bord extérieur droit (14) présente une distance au bord longitudinal droit (11) valent au moins la largeur gauche (b₂₎ et doux fois l'épaisseur (s) de la matière et en ce que, dans la région du bord longitudinal gauche (21), est prévue une échancrure (23) de le surface laterale (20) d'au moins l'épaisseur (s) de la matière, dont le bord droit extérieur (24) présente une distance (a₂) au bord longitudinal gauche (21) valent au moins la largeur droite (b₁) moins l'épaisseur (s) de la matière.

7. Emballage selon une des revendications 1 à 6, caractérisé en ce que la partie latérale (10, 10', 10'', 10''') est bombée vers l'intérieur de l'emballage (1, 1', 1'', 1''') à l'état assemblé.

8. Emballage selon une des revendications 1 à 7, caractérisé en ce que la partie couvercle et fond (30, 30', 30'', 30''') est munie de gorges réceptrices (35) qui s'étendant sur le tour de tous les bords extérieurs (31, 31', 31'', 31''', 32, 32', 32'', 32''', 33, 33', 33'', 33''', 34, 34', 34'', 34''') et dans lesquelles les bords supérieurs et inférieurs (19, 19', 19'', 19''') des parties latérales (10, 10', 10'', 10''') sont emboîtes a l'état assemblé.

9. Emballage selon une des revendications 1 à 8, caractérisé en ce que les surfaces d'appui (36) sont disposées le long de deux bords extérieurs (31, 31', 31'', 31''', 33, 33', 33'', 33''') de la partie couvercle et fond (30, 30', 30'', 30''') qui se font face, sont disposées chacune parallélement à la rainure réceptrice (35) correspondante, la surface d'appui (36) pouvant être munie d'une couche (37) faite d'une matière molle, flexible.

10. Emballage selon une des revendications 1 à 9, caractérisé en ce qu'au moins un dégagement (41) est prévu le long de chacun des bords extérieurs (31, 31', 31", 31"', 33, 33', 33", 33''') de la partie couvercle et fond (30, 30', 30'', 30''') qui se font face.

11. Emballage selon une des revendications 1 à 10, caractérisé an ce que l'emballage (1, 1', 1'', 1''') est composé de bois défibré qui est comprimé avec des résines pour former des pièces de forme.

12. Emballage selon une des revendications 1 à 11, caractérisé en ce que la matière à base de bois défibré est recouverte sur les deux faces de voiles de fibres synthetiques qui adhèrent fortement après la compression et dont le poids par unite de surface est de 20 à 100 g/m².

13. Emballage selon une des revendications 1 à 12, caractérisé en ci que la matière a base de bois défibré comprend, en supplément de son volume, plusieurs voiles de fibres synthétiques stratifiées, dont le poids par unité de surface est de 10 à 15 g/m², la proportion totale des fibres synthétiques étant de 10 à 25 % en poids.

14. Emballage selon une des revendications 1 à 13, caractérisé en ce que la matière à base de bois défibré comprend une proportion de 5 à 15 % en poids de fibres synthétiques en supplément des voiles superficiels.

15. Emballage selon une des revendications 1 à 14, caractérisé en ce que la matière à base de bois défibré contient un mélange broyé de morceaux d'emballages du genre décrit qui sont devenus inutilisables, pour une proportion de 10 à 60 % en poids.

16. Emballage selon une des revendications 1 à 15, caractérisé en ce que la matière à base du bois défibré contient un mélange broyé d'autres matières recyclées comme, par exemple, du carton, des déchets de bois et des textiles.

17. Emballage selon une des revendications 1 à 16, caractérisé en ce que la matière à base de bois défibré est colores en fonction du produit.
